# EUROPÄISCHE PATENTSCHRIFT

(11) **EP 1 987 970 B1**
(45) Veröffentlichungstag und Bekanntmachung des Hinweises auf die Patenterteilung: **06.03.2013**
(21) Anmeldenummer: 08155440.4
(22) Anmeldetag: 30.04.2008
(51) Int. Cl.: B60G 17/016, B60N 2/50

(54) **Aktives Bewegungssystem eines landwirtschaftlichen oder industriellen Nutzfahrzeugs**
Active motion system for agricultural or industrial vehicle
Système de déplacement actif pour véhicule agricole ou industriel

(30) Priorität: 04.05.2007 DE 102007021498
(43) Veröffentlichungstag der Anmeldung: 05.11.2008
(73) Patentinhaber: Deere & Company, Moline, IL 61265-8098 (US)
(72) Erfinder: Tarasinski Dr., Nicolai, 67227, Frankenthal (DE); Hahn, Klaus, 68199, Mannheim (DE)
(74) Vertreter: Holst, Sönke

(56) Entgegenhaltungen:
- EP-A1- 0 913 280
- EP-A1- 1 186 467
- EP-A2- 1 582 382
- WO-A1-2005/042300
- WO-A1-2007/030036
- DE-A1- 10 348 916
- DE-A1-102005 009 701
- FR-A1- 2 828 154
- US-A1- 2004 049 323

## Beschreibung

Die vorliegende Erfindung betrifft ein landwirtschaftliches oder industrielles Nutzfahrzeug, insbesondere einen Traktor, mit einem aktiven Bewegungssystem, mit mindestens einem aktiv ansteuerbaren Aktuator, mindestens einem Sensor und einer Steuereinrichtung. Eine Sekundärseite ist gegenüber einer Primärseite des Fahrzeugs federbar bewegbar. Mit dem Aktuator ist die Sekundärseite gegenüber der Primärseite des Fahrzeugs dämpfend und/oder federnd abgestützt. Ein Bediener des Fahrzeugs ist der Sekundärseite des Fahrzeugs zugeordnet. Mit dem mindestens einen Sensor ist eine Größe, die eine Zustandsgröße des Fahrzeugs repräsentiert, detektierbar und der Steuereinrichtung übermittelbar. Mit der Steuereinrichtung ist eine Zustandsgröße eines aktuellen Betriebszustands des Fahrzeugs ermittelbar und in Abhängigkeit des aktuellen Betriebszustands des Fahrzeugs der mindestens eine Aktuator derart aktiv ansteuerbar, dass mit dem mindestens einen Aktuator die Sekundärseite gegenüber der Primärseite bewegbar ist, um hierdurch dem Bediener einen nicht optimalen oder einen unsicheren Betriebszustand des Fahrzeugs oder einen nicht optimalen oder einen unsicheren Betriebszustand mindestens einer Arbeitsfunktion wahrnehmbar zu machen.

Aktive Bewegungssysteme im Sinne der vorliegenden Erfindung sind somit Federungs- und Dämpfungssysteme, mit welchen Bewegungen zwischen einer Primärseite und einer Sekundärseite des Fahrzeugs gefedert und/oder gedämpft werden. Diese Systeme dienen ausnahmslos dazu, den Fahrer gegenüber Schwingungen des Fahrzeugs bzw. der Primärseite zu isolieren und/oder derartigen Bewegungen entgegenzuwirken. Hierdurch wird eine Komfortsteigerung beim Betrieb des Fahrzeugs erzielt. Auf Grund einer solchen Isolierung kann es jedoch zu einer Falschbewertung von kritischen Fahrzuständen kommen, da eine spürbare, taktile Rückkopplung zwischen Fahrzeug und Bediener auf Grund des aktiven Bewegungssystems nicht mehr vorhanden oder stark abgeschwächt ist.

Als Fahrzeuge in diesem Zusammenhang kommen landwirtschaftliche Nutzfahrzeuge, also beispielsweise Traktoren, Erntemaschinen, Mähdrescher, Feldhäcksler und selbstfahrende Spritzen, aber auch industrielle Fahrzeuge, also beispielsweise Baufahrzeuge, Planierraupen, Planiermaschinen, Tieflöffelbagger, Laderfahrzeuge, Kipper, Kräne und Teleskoplader, in Frage.

Eine Unterstützung bei der Bedienung eines Fahrzeugs wird im Allgemeinen durch Warnanzeigeelemente dem Bediener visuell oder gegebenenfalls akustisch zur Kenntnis gebracht. Hierbei sind vor allem Warnleuchten vorgesehen, welche auf einen kritischen Zustand des Fahrzeugs hinweisen, beispielsweise den der überhöhten Temperatur des Motoröls oder der Kühlflüssigkeit. Die Wahrnehmung eines Bedieners solcher Warnzeichen ist nicht frei von äußeren Einflüssen wie beispielsweise Licht, Lärm und/oder Blickfeld und kann daher übersehen bzw. überhört werden.

Eine abweichende Lösung schlägt in diesem Zusammenhang die DE 10 2005 009 701 A1 vor. Diese offenbart eine Warnvorrichtung für ein Fahrzeug, bei der eine sensorische Erfassung von auf einer Fahrbahnoberfläche angebrachten Fahrspurmarkierungen erfolgt, wobei eine Steuereinrichtung bei Erkennung eines unbeabsichtigten Verlassens der befahrenen Fahrspur die Ausgabe haptischer Warnsignale in Gestalt eines Nagelbandratterns oder dergleichen durch entsprechende Eingriffe in eine aktive Fahrwerksfederung des Fahrzeugs veranlasst. Eine Verwendung der Warnvorrichtung bietet sich vorrangig im PKW-Bereich an, ist jedoch auf den Nutzfahrzeugbereich nicht ohne Weiteres übertragbar. So führen die dortigen hohen Fahrwerksmassen zu einem vergleichsweise trägen Ansprechverhalten der Fahrwerksfederung. Insofern ist diese zur Erzeugung der haptischen Warnsignale denkbar ungeeignet.

Der vorliegenden Erfindung liegt daher die Aufgabe zugrunde, ein landwirtschaftliches oder industrielles Nutzfahrzeug mit einem aktiven Bewegungssystem der eingangs genannten Art anzugeben und weiterzubilden, durch welches die vorgenannten Probleme überwunden werden. Insbesondere soll einem Bediener eines Fahrzeugs eine weitergehende Unterstützung bei der Bedienung des Fahrzeugs gegeben werden, mit welcher dieser auch auf einen kritischen oder nicht optimalen Betriebszustand des Fahrzeugs in verbesserter Weise aufmerksam gemacht wird.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße aktive Bewegungssystem ist dadurch gekennzeichnet, dass die Primärseite einen Fahrzeugrahmen und die Sekundärseite eine Bedienerplattform oder eine Fahrzeugkabine aufweist, oder dass die Primärseite eine Bedienerplattform oder eine Fahrzeugkabine und die Sekundärseite einen Fahrzeugsitz aufweist.

Insbesondere für Zustandsgrößen, welche an dem Fahrzeug vom Bediener nicht unmittelbar bemerkt werden können, ist das erfindungsgemäße aktive Bewegungssystem für eine sichere Bedienung des Fahrzeugs hilfreich. Dies kann vor allem bei am Fahrzeug angehängten Anhängern (beispielsweise eine Spritze mit einem ausgefahrenen Spritzgestänge) relevant sein, welche aufgrund von Bodenunebenheiten Roll- und/oder Gierbewegungen ausführen, die das Gespann, bestehend aus Fahrzeug und Anhänger, in einen gefährlichen Fahrtzustand versetzen können.

Nun kann der Aktuator eine passive (Feder-) Bewegung ausführen, wenn sich die Sekundärseite gegenüber der Primärseite bewegt. In diesem Fall ist der Aktuator zusätzlich derart anzusteuern, dass dieser eine vorgebbare zeitlich veränderliche, vorzugsweise periodische Bewegung ausführt. Es ist jedoch auch denkbar, dass der Aktuator an einer Bewegung zwischen Primärseite und Sekundärseite nicht passiv beteiligt ist und lediglich zu einer erfindungsgemäßen aktiven Bewegungsanregung eingesetzt wird. Die Art der vom Aktuator hervorgerufenen Bewegung kann grundsätzlich beliebiger Art sein. Es kann sich um eine periodische oder aperiodische Bewegung handeln. Die Amplituden der Bewegung können im Wesentlichen konstant oder unterschiedlich sein. Es ist eine singuläre Bewegung oder es sind wiederkehrende Bewegungen denkbar. Auch eine Bewegung entsprechend einem Vibrationsalarm eines Mobiltelefons, beispielsweise des Fahrzeugsitzes, kann vorgesehen sein.

Im Konkreten kann die von dem Aktuator hervorgerufene Bewegung der Sekundärseite gegenüber der Primärseite eine Schwingungsbewegung sein, indem der Aktuator beispielsweise eine Schwingungsbewegung ausführt. Die Schwingungsbewegung kann eine vorgebbare Frequenz aufweisen, welche vorzugsweise im Wesentlichen konstant ist und/oder in einem Bereich von 0,1 Hz bis 1000 Hz liegt.

Weiterhin kann die von dem Aktuator hervorgerufene Bewegung der Sekundärseite gegenüber der Primärseite eine pulsförmige Bewegung sein. Dies kann dadurch erreichbar sein, dass der Aktuator eine pulsförmige Bewegung ausführt. Die pulsförmige Bewegung kann einen vorgebbaren Pulsabstand und/oder eine vorgebbare Pulsdauer aufweisen, welche vorzugsweise im Wesentlichen konstant ist und/oder in einem Bereich von 1 s bis 1/1000 s liegt.

Die von dem Aktuator hervorgerufene pulsförmige Bewegung der Sekundärseite gegenüber der Primärseite kann eine im Wesentlichen dreieckförmige Pulsform aufweisen. Im Konkreten kann die Pulsform eine sägezahnförmige Form aufweisen. Ein vorgebbarer Pulsabstand kann in einem Bereich von 0 s bis 10 s liegen.

Bevorzugt weist die von dem Aktuator hervorgerufene Bewegung der Sekundärseite gegenüber der Primärseite eine vorgebbare Frequenz auf, welche nicht in einem vorgebbaren Eigenfrequenzbereich des Fahrzeugs oder des Bedieners liegt. Dementsprechend sollte es durch das erfindungsgemäße aktive Bewegen der Sekundärseite gegenüber der Primärseite nicht zu einem Aufschaukeln des Bewegungssystems und somit zu einer gefährlichen Situation des Fahrzeugs bzw. dessen Komponenten kommen. Auch ist vorgesehen, für länger andauernde aktive Bewegungen keinen Eigenfrequenzbereich des Bedieners zu wählen, beispielsweise eine Frequenz aus dem Bereich von 2 Hz bis 7 Hz, was die Eigenfrequenz des menschlichen Magens ist, so dass dem Bediener nicht übel wird.

Die Bewegung der Sekundärseite gegenüber der Primärseite kann eine Amplitude mit einem vorgebbaren Wert aufweisen, welcher vorzugsweise konstant und/oder in einem Bereich von 1 mm bis 20 cm liegt.

Bevorzugt ist ein Aktuatorsensor vorgesehen, mit welchem der aktuelle Zustand des Aktuators ermittelbar ist. Der aktuelle Zustand des Aktuators ist der Steuereinrichtung übermittelbar. Hierbei wird üblicherweise der Aktuatorsensor ein elektrisches Signal erzeugen, welches der Steuereinrichtung zugeleitet wird. Hierdurch kann der Steuereinrichtung der aktuelle Betriebszustand des Aktuators mitgeteilt werden, was unter Umständen für eine aktive Ansteuerung des Aktuators erforderlich ist. Beispielsweise kann ein Sensor vorgesehen sein, welcher die aktuelle Position eines Kolbens eines doppeltwirkenden Hydraulikzylinders detektiert.

Der Aktuator kann elektrisch, pneumatisch oder hydraulisch und/oder hydropneumatisch antreibbar bzw. betätigbar sein.

Gemäß einer bevorzugten Ausführungsform ist der Aktuator in Form eines Hydraulikzylinders ausgebildet. Vorzugsweise weist der Aktuator einen doppeltwirkenden Hydraulikzylinder auf. Der Aktuator ist aktiv ansteuerbar, indem der Fluss von unter Druck stehender Hydraulikflüssigkeit zu dem Aktuator hin oder von dem Aktuator weg mit mindestens einem elektrisch, elektromagnetisch oder hydraulisch ansteuerbaren Hydraulikventil steuerbar ist.

Mit dem mindestens einen Sensor wird eine Größe detektiert, welche eine Zustandsgröße des Fahrzeugs repräsentiert. Eine Zustandsgröße des Fahrzeugs kann beispielsweise die Geschwindigkeit, die Beschleunigung, die Fahrtrichtung, der aktuell eingestellte Lenkwinkel, die Abweichung von einer vorgegebenen Fahrtrichtung, die räumliche Position des Fahrzeugs, die Gierbewegung oder das Giermoment, die Bestimmung eines Hindernisses, die Drehzahl einer Motor- oder Getriebewelle, die Drehzahl mindestens eines Rads, das von einer Welle übertragene Drehmoment, das von einem Antriebsaggregat abgegebene Drehmoment, die Leistung oder die Auslastung eines Antriebsaggregats, der Energieverbrauch oder der Kraftstoffverbrauch eines Verbrauchers, der Schlupf des Fahrzeugs über dem Untergrund, eine Achslast, der Druck oder der Volumenstrom oder die Volumenstromänderung einer Hydraulikflüssigkeit, der Ausfahrweg eines Zylinders, der Fahrzustand, die Triebkraft des Fahrzeugs und/oder die auf das Fahrzeug wirkende Kraft eines Anhängers und/oder eines Arbeitsgeräts sein. Eine auf das Fahrzeug wirkende Kraft kann insbesondere eine Zugkraft, eine Querkraft und/oder eine Stützkraft sein.

Dementsprechend kann mindestens ein Sensor vorgesehen sein, mit welchem eine Größe detektierbar ist, welche die Ermittlung der Geschwindigkeit, der Beschleunigung, der Fahrtrichtung, des aktuell eingestellten Lenkwinkels, der Abweichung von einer vorgegebenen Fahrtrichtung, der räumlichen Position des Fahrzeugs (relativ zu einem Bezugssystem) und/oder die Bestimmung eines Hindernisses ermöglicht. Mit dem mindestens einen Sensor kann auch eine Größe detektierbar sein, welche die Ermittlung der Drehzahl einer Motor- oder Getriebewelle, der Drehzahl mindestens eines Rads, des von einer Welle übertragenen Drehmoments, des von einem Antriebsaggregat abgegebenen Drehmoments, der Leistung oder der Auslastung eines Antriebsaggregats, des Energieverbrauchs oder des Kraftstoffverbrauchs eines Verbrauchers, des Schlupfs des Fahrzeugs über dem Untergrund, einer Achslast, des Drucks oder des Volumenstroms oder einer Volumenstromänderung einer Hydraulikflüssigkeit, des Ausfahrwegs eines Zylinders, der auf das Fahrzeug wirkenden Zugkraft eines Anhängers und/oder eines Arbeitsgeräts, des Fahrzustands und/oder der Triebkraft des Fahrzeugs ermöglicht.

Üblicherweise wird der Sensor derart ausgestaltet sein, dass dieser eine entsprechende Größe detektiert bzw. erfasst. Der Sensor erzeugt ein von der detektierten Größe abhängiges elektrisches Signal, welches der Steuereinrichtung zur Ermittlung des aktuellen Betriebszustands des Fahrzeugs übermittelt wird. Die Steuereinrichtung erzeugt in Abhängigkeit des aktuellen Betriebszustands des Fahrzeugs ein Signal bzw. eine Signalfolge, um den mindestens einen Aktuator anzusteuern.

Ein optimaler Betriebszustand des Fahrzeugs liegt insbesondere dann vor, wenn das Fahrzeug einen minimierten Kraftstoffverbrauch aufweist und/oder wenn die Fahrzeuggeschwindigkeit oder der Wirkungsgrad des Fahrzeugs bzw. einzelne Komponenten davon optimal an den aktuellen Betriebszustand des Fahrzeugs angepasst sind. Mit anderen Worten ist der Wirkungsgrad der einzelnen Komponenten bzw. des gesamten Fahrzeugs für den aktuellen Betriebszustand des Fahrzeugs optimiert bzw. daran angepasst.

Ein aktueller Betriebszustand kann beispielsweise das Pflügen mit einem Traktor sein, an welchem ein Pflug adaptiert ist. In einem weiteren Schritt kann ein anderer aktueller Betriebszustand das Einsähen von Pflanzensamen betreffen, wenn an dem Traktor eine Sämaschine adaptiert ist.

Ein optimaler Betriebszustand wird auch für den Fall angestrebt, dass das mit dem Fahrzeug und gegebenenfalls mit einem an dem Fahrzeug adaptierten Arbeitsgerät bearbeitete bzw. verarbeitete Gut einen optimalen Durchsatz oder Umsatz aufweist. Ein Beispiel hierfür kann ein Traktor mit einer an den Traktor adaptierten Rundballenpresse darstellen. In einem optimalen Betriebszustand wird die Rundballenpresse derart betrieben, dass das mit-der Rundballenpresse aufgenommene Heu mit einer maximalen Fördergeschwindigkeit (maximaler Durchsatz) aufgenommen wird, ohne eine Verstopfung zu verursachen.

Ein sicherer Betriebszustand des Fahrzeugs liegt insbesondere dann vor, wenn die Motorauslastung, die Neigung des Fahrzeugs gegenüber der Waagrechten, das Giermoment, die Ballastierung des Fahrzeugs mit einem gegebenenfalls daran adaptierten Arbeitsgerät, die im Antriebsstrang vorherrschende Drehmomentbelastung bzw. die im Antriebsstrang vorliegende Drehzahl rotierender Bauteile und/oder die Geschwindigkeit des Fahrzeugs (auch bei Kurvenfahrt) einen vorgebbaren Grenzwert nicht überschreitet. Weitere sicherheitsrelevante Parameter sind beispielsweise die Motoröltemperatur, die Temperatur der Kühlmittelflüssigkeit des Verbrennungsmotors des Fahrzeugs oder der Druck einer hydraulischen Bremsanlage. Dementsprechend liegt ein sicherer Betriebszustand des Fahrzeugs dann vor, wenn die entsprechenden vorgebbaren Grenzwerte nicht über- bzw. unterschritten werden. Ein sicherer Betriebszustand des Fahrzeugs liegt auch dann vor, wenn sich kein Hindernis im Fahrbereich oder Wirkungsbereich des Fahrzeugs befindet. Mit anderen Worten liegt ein unsicherer Betriebszustand dann vor, wenn die entsprechenden vorgebbaren Grenzwerte über- bzw. unterschritten werden und/oder wenn sich ein Hindernis im Fahrbereich oder Wirkungsbereich des Fahrzeugs befindet.

Der Aktuator ist in einer bevorzugten Ausführungsform mit einer vorgebbaren Charakteristik, beispielsweise mit einer Federrate in Abhängigkeit eines Federwegs, beaufschlagbar.

Wie schon angedeutet, kann die von dem Aktuator hervorgerufene Bewegung der Sekundärseite gegenüber der Primärseite derart begrenzbar sein, dass diese zu keiner kritischen Situation für das Fahrzeug und/oder für den Bediener führt.

Nun wird in der Regel das Fahrzeug ein Federungssystem aufweisen, welches Krafteinwirkungen zwischen Primärseite und Sekundärseite entkoppelt. Ein Beispiel hierfür ist ein Kabinenfederungssystem, mit welchem stoßartige Bewegungen zwischen Fahrzeugrahmen und Fahrzeugkabine abgefedert bzw. gedämpft werden. Aufgrund dessen kann der Bediener des Fahrzeugs kritische Fahrzustände falsch bewerten oder unterschätzen. Daher kann bei einem solchen Bewegungssystem gemäß einer bevorzugten Ausführungsform ein Betriebsmodus vorgesehen sein, bei welchem mit dem Aktuator die Sekundärseite gegenüber der Primärseite derart bewegbar ist, dass eine auftretende Krafteinwirkung simulierbar ist. Bevorzugt wird eine solche Krafteinwirkung mit einem Teil der tatsächlich auftretenden Bewegungsamplitude simuliert. So wäre es beispielsweise denkbar, ab einer vorgebbaren Fahrzeuggeschwindigkeit und bei einer entsprechend hohen Unebenheit des Untergrunds bei einem Kabinenfederungssystem den mindestens einen Aktuator derart aktiv anzusteuern, dass die Sekundärseite gegenüber der Primärseite Stöße aufgrund der Fortbewegung auf dem unebenen Untergrund, wenn auch zeitversetzt, dem Bediener des Fahrzeugs zur Wahrnehmung bringt. Eine vergleichbare Wirkung ist grundsätzlich auch mit dem Arretieren eines passiven Kabinenfederungssystems denkbar, wobei dann allerdings sämtliche Stöße ungefedert übertragen werden.

Ganz allgemein und gemäß einer besonders bevorzugten Ausführungsform des aktiven Bewegungssystems ist mit dem mindestens einen Aktuator die Sekundärseite gegenüber der Primärseite dann bewegbar, wenn ein von einem optimalen Betriebszustand abweichender Betriebszustand vorliegt.

Ebenfalls ganz allgemein und auch gemäß einer weiteren bevorzugten Ausführungsform des aktiven Bewegungssystems ist mit dem mindestens einen Aktuator die Sekundärseite gegenüber der Primärseite dann bewegbar, wenn ein von einem sicheren Betriebszustand abweichender Betriebszustand vorliegt.

Bevorzugt ist mit dem mindestens einen Aktuator die Sekundärseite gegenüber der Primärseite dann bewegbar, wenn der aktuelle Betriebszustand bzw. eine aktuelle Zustandsgröße des Fahrzeugs oder einer Arbeitsfunktion des Fahrzeugs einen vorgegebenen Grenzwert über- oder unterschreitet. Hierbei kann es sich beispielsweise um einen über einem vorgebbaren maximalen Wert liegenden Druck einer Hydraulikflüssigkeit handeln, mit welcher ein Hydraulikzylinder eines Frontladers ansteuerbar ist, wobei der Frontlader an einem Traktor adaptiert sein kann. Eine solche Situation kann beispielsweise auf eine Überlastung beim Anheben der Laderschaufel aufmerksam machen.

Im Folgenden wird auf relativ konkrete Situationen eingegangen, bei welchen der mindestens eine Aktuator derart aktiv ansteuerbar ist, dass mit diesem die Sekundärseite gegenüber der Primärseite bewegbar ist, um dem Bediener einen nicht optimalen oder einen unsicheren Betriebszustand des Fahrzeugs bzw. einer Arbeitsfunktion des Fahrzeugs wahrnehmbar zu machen.

So kann mit dem mindestens einen Aktuator die Sekundärseite gegenüber der Primärseite dann bewegt werden, wenn die Drehzahl einer Welle und/oder einer Welle eines Arbeitsgeräts von einer vorgegebenen Drehzahl oder von einem vorgegebenen Drehzahlbereich abweicht.

Mit dem mindestens einen Aktuator kann die Sekundärseite gegenüber der Primärseite dann bewegbar sein, wenn die Geschwindigkeit des Fahrzeugs von einer vorgegebenen Geschwindigkeit oder von einem vorgebbaren Geschwindigkeitsbereich abweicht.

Weiterhin kann mit dem mindestens einen Aktuator die Sekundärseite gegenüber der Primärseite in Abhängigkeit von der Beschaffenheit der Fahrbahn bzw. des Untergrunds bewegt werden. Wenn beispielsweise der Untergrund ausgeprägte Unebenheiten aufweist, welche mit einem entsprechenden Sensor detektierbar sind, kann bei dem Überschreiten einer vorgebbaren Fahrzeuggeschwindigkeit die Sekundärseite gegenüber der Primärseite mit dem Aktuator in Bewegung versetzt werden, wobei die Bewegungsamplitude umso größer sein kann, je höher die Überschreitung des vorgebbaren Fahrzeuggeschwindigkeitswerts und/oder je ausgeprägter die Bodenunebenheiten sind.

Mit dem mindestens einen Aktuator kann die Sekundärseite gegenüber der Primärseite mit einem einzelnen Bewegungspuls dann bewegbar sein, wenn ein bestimmter Zustand eines an das Fahrzeug adaptierten Arbeitsgeräts vorliegt. Hierdurch kann dem Bediener wahrnehmbar gemacht werden, dass an dem Fahrzeug ein Arbeitsgerät adaptiert ist.

Es kann Situationen geben, in welchen die mit dem mindestens einen Aktuator hervorgerufene Bewegung zwischen der Sekundärseite und der Primärseite abschaltbar ist. Dies kann in automatischer Weise vorgesehen sein, beispielsweise bei Kurvenfahrten. Dies wäre in der Steuereinrichtung entsprechend vorzusehen bzw. die Steuereinrichtung wäre entsprechend zu programmieren. Zusätzlich oder alternativ kann ein von einem Bediener betätigbares Betätigungselement vorgesehen sein, mit welchem diese Funktionalität ein- bzw. ausschaltbar ist.

Weiterhin kann vorgesehen sein, dass zusätzlich zu der mit dem mindestens einen Aktuator hervorgerufenen Bewegung zwischen der Sekundärseite und der Primärseite ein visuelles und/oder akustisches Signal erzeugbar ist. Zum Erzeugen eines visuellen Signals kann eine hierzu vorgesehene Lichtquelle aktiviert werden, eventuell mit zunehmender Lichtstärke bei Zunahme des Gefährlichkeitsgrads. Zusätzlich oder alternativ kann ein akustisches Signal in Form eines Warntons mit gegebenenfalls zunehmender Lautstärke erzeugt und dem Bediener zur Kenntnis gebracht werden. Somit kann vorgesehen sein, dass ein Bediener taktil, visuell sowie akustisch über einen Lautsprecher in der Fahrzeugkabine vor einem Sicherheitsrisiko gewarnt werden kann.

Es gibt nun verschiedene Möglichkeiten, die Lehre der vorliegenden Erfindung in vorteilhafter Weise auszugestalten und weiterzubilden. Dazu wird einerseits auf die Unteransprüche und andererseits auf die nachfolgende Erläuterung der bevorzugten Ausführungsbeispiele der Erfindung anhand der Zeichnungen verwiesen. In den Zeichnungen zeigen jeweils in einer schematischen Darstellung:
- Fig. 1 bis 3: jeweils ein Ausführungsbeispiel eines aktiven Bewegungssystems, welches an einem landwirtschaftlichen Nutzfahrzeug realisiert ist,
- Fig. 4: ein landwirtschaftliches Nutzfahrzeug, an welchem mehrere Sensoren angeordnet sind, und
- Fig. 5a bis 5c: jeweils ein Diagramm der Amplitude der Auslenkung eines Aktuators des aktiven Bewegungssystems als Funktion der Zeit.

In den Figuren sind gleiche oder ähnliche Bauteile mit denselben Bezugszeichen gekennzeichnet.

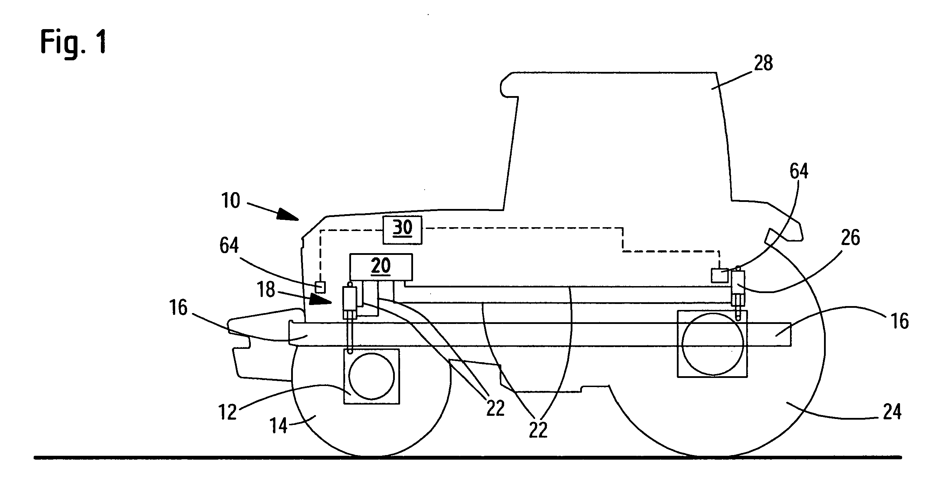

In Fig. 1 bis 3 ist jeweils ein aktives Bewegungssystem gezeigt, welches an einem als landwirtschaftliches Nutzfahrzeug ausgebildeten Fahrzeug 10 in Gestalt eines Traktors implementiert ist.

Fig. 1 zeigt ein aktives Bewegungssystem als Bestandteil einer Rad- oder Achsfederung des Fahrzeugs 10, wie es beispielsweise aus der eingangs genannten Offenlegungsschrift DE 10 2005 009 701 A1 bekannt ist.

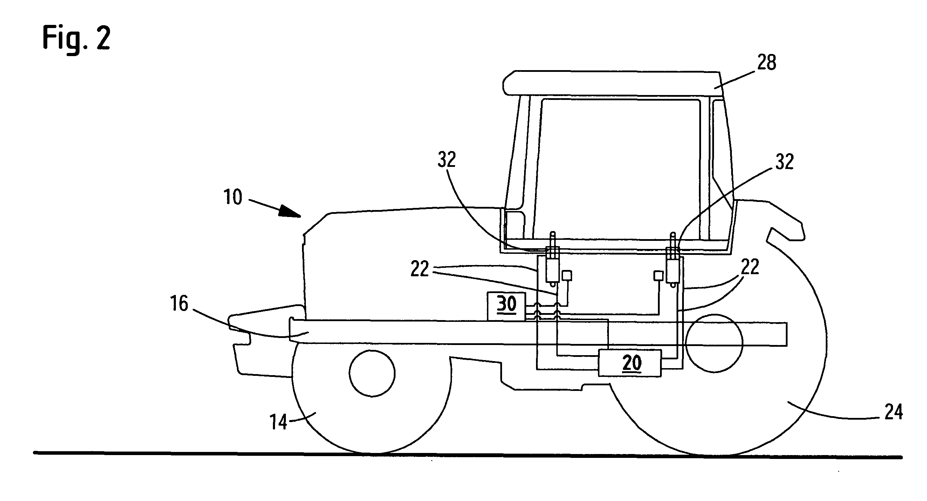

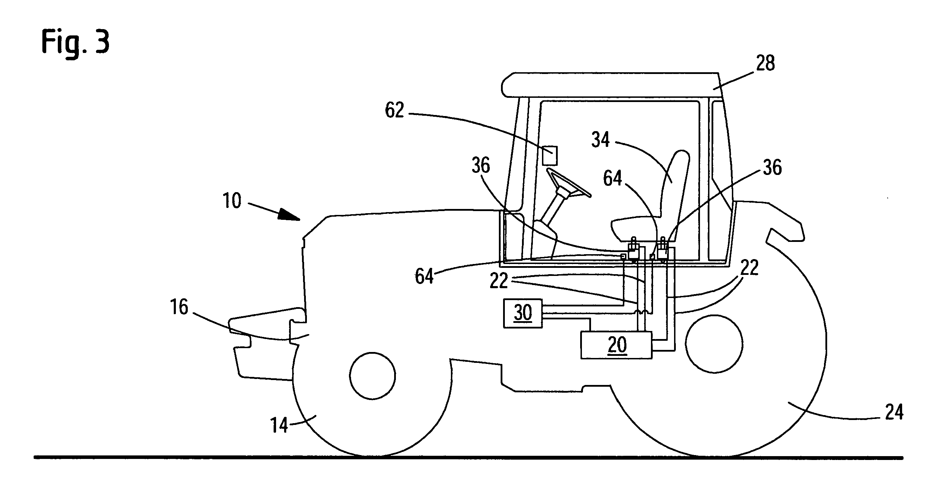

Fig. 2 und 3 zeigen verschiedene erfindungsgemäße aktive Bewegungssysteme als Bestandteil eines Kabinenfederungssystems bzw. eines Sitzfederungssystems des Fahrzeugs 10.

Das aktive Bewegungssystem des Fahrzeugs 10 gemäß Fig. 1 weist eine aktive Vorderachsfederung sowie eine aktive Federung der hinteren Räder auf, welche nach dem Prinzip einer Einzelradaufhängung beweglich gelagert sind. An der Vorderachse 12 ist endseitig auf jeder Seite jeweils ein Vorderrad 14 drehbar gelagert. Die Vorderachse 12 als Primärseite ist gegenüber dem Fahrzeugrahmen 16 als Sekundärseite durch zwei Aktuatoren 18 (ein Aktuator auf der linken und ein Aktuator auf der rechten Seite) federnd und dämpfend abgestützt. Bei den Aktuatoren 18 handelt es sich jeweils um einen doppeltwirkenden Hydraulikzylinder. Bei dem aktiven Bewegungssystem handelt es sich um ein hydropneumatisches Achsfederungssystem, wie es beispielsweise aus der EP 0 913 280 B1 bekannt ist. Das Hydrauliksystem 20 ist lediglich schematisch angedeutet. Dieses weist unter anderem eine Hydraulikpumpe, einen Sumpf, Druckspeicher, Ventile und Hydraulikleitungen auf (nicht dargestellt). Die Aktuatoren 18 sind mittels Verbindungsleitungen 22 für Hydraulikflüssigkeit und für Steuer- und Sensorsignale mit dem Hydrauliksystem 20 verbunden.

Die Hinterräder 24 sind mittels einer Einzelradaufhängung, welche nicht im Detail gezeigt ist, am Fahrzeugrahmen 16 des Fahrzeugs 10 federnd und dämpfend aufgehängt. Die Einzelradaufhängung kann grundsätzlich wie in WO 02/072379 A2 realisiert sein. Die dem jeweiligen Hinterrad 24 zugeordneten Bauteile der Einzelradaufhängung (nicht dargestellt) als Primärseite sind gegenüber dem Fahrzeugrahmen 16 als Sekundärseite mit jeweils einem Aktuator 26 abgestützt. Die Aktuatoren 26 sind mittels Verbindungsleitungen 22 mit dem Hydrauliksystem 20 verbunden. Der Bediener, der das Fahrzeug 10 bedient, befindet sich hierbei in der Fahrzeugkabine 28, welche sekundärseitig angeordnet ist.

Die Aktuatoren 18, 26 sind derart in ein Federungssystem eingebunden, dass diese mit einer vorgebbaren Charakteristik beaufschlagbar sind. Hierbei kann es sich um eine Federrate handeln, die in Abhängigkeit des Federwegs und/oder der Achslast veränderbar ist, wie dies beispielsweise bei dem Achsfedersystem der EP 0 913 280 B1 vorgesehen ist. Die Charakteristik weist in Abhängigkeit der anzusteuernden Zustandsgröße zumindest bereichsweise, jedoch vorzugsweise über den gesamten Bereich, den Verlauf einer stetigen analytischen Funktion auf.

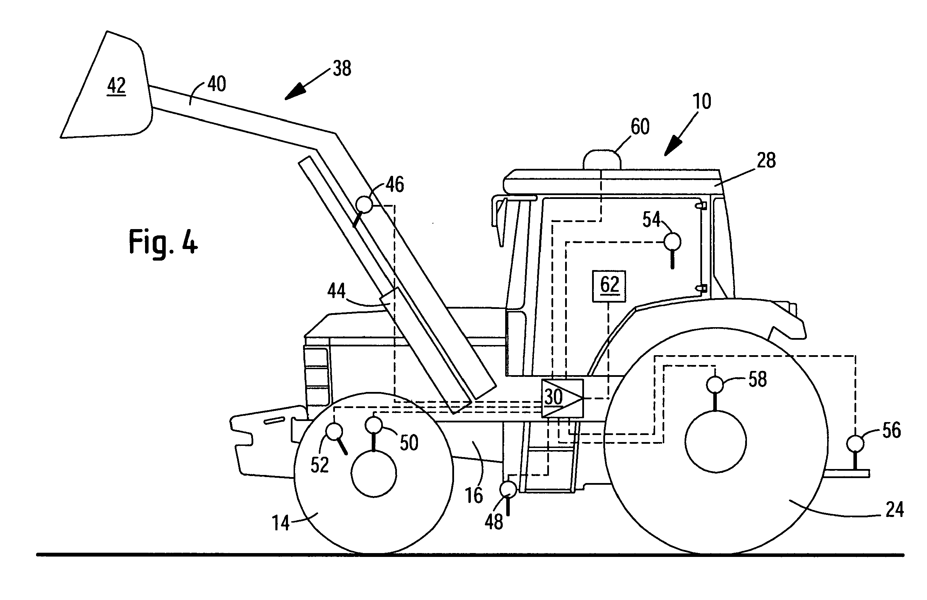

Das Fahrzeug 10 weist mehrere Sensoren 48, 50, 52, 54, 56, 58 auf, welche in Fig. 4 beispielhaft gezeigt sind. Weiterhin ist eine Steuereinrichtung 30 vorgesehen, mit welcher die von den Sensoren 48, 50, 52, 54, 56, 58 erzeugten Signale empfangen und verarbeitet werden. Mit der Steuereinrichtung 30 wird das aktive Bewegungssystem angesteuert. Mit einem der Sensoren 48, 50, 52, 54, 56, 58 ist eine Größe detektierbar, welche eine Zustandsgröße des Fahrzeugs 10 repräsentiert. Mit der Steuereinrichtung 30 kann zumindest eine Zustandsgröße des aktuellen Betriebszustands des Fahrzeugs 10 ermittelt werden, beispielsweise die aktuelle Fahrzeuggeschwindigkeit über dem Boden.

In erfindungsgemäßer Weise sind mit der Steuereinrichtung 30 in Abhängigkeit des aktuellen Betriebszustands des Fahrzeugs 10 die Aktuatoren 18, 26 derart aktiv ansteuerbar, dass mit diesen die Sekundärseite, d.h. der Fahrzeugrahmen 16, gegenüber der Primärseite, d.h. die dem jeweiligen Hinterrad 24 zugeordneten Bauteile der Einzelradaufhängung, bewegbar ist, um dem Bediener in der Fahrzeugkabine 28 einen nicht optimalen oder einen unsicheren Betriebszustand des Fahrzeugs 10 oder einen nicht optimalen oder einen unsicheren Betriebszustand mindestens einer Arbeitsfunktion wahrnehmbar zu machen.

Fig. 2 zeigt ein erstes Ausführungsbeispiel eines erfindungsgemäßen aktiven Bewegungssystems, bei welchem die Fahrzeugkabine 28 - als Sekundärseite - gegenüber dem Fahrzeugrahmen 16 - als Primärseite - mittels der Aktuatoren 32 federnd und dämpfend abgestützt ist. Auch hier handelt es sich um eine aktive Federung bzw. Dämpfung. Zur Federung sind im Hydrauliksystem 20 Druckspeicher (nicht dargestellt) und zur Dämpfung entsprechend dimensionierte Drosseln (nicht dargestellt) vorgesehen. In diesem Ausführungsbeispiel sind vier Aktuatoren 32 vorgesehen, nämlich zwei Aktuatoren 32 auf der linken und zwei Aktuatoren 32 auf der rechten Seite. Eine Ausgestaltung des aktiven Bewegungssystems mit nur zwei Aktuatoren 32 wäre ebenfalls denkbar, bei der lediglich heckseitig ein Aktuator auf der linken und ein Aktuator auf der rechten Seite vorgesehen ist.

Fig. 3 zeigt ein zweites Ausführungsbeispiel eines erfindungsgemäßen aktiven Bewegungssystems, bei welchem der Fahrzeugsitz 34 - als Sekundärseite - gegenüber der Fahrzeugkabine 28 - als Primärseite - abgestützt ist. Hierzu sind zwei Aktuatoren 36 vorgesehen, mit welchen der Fahrzeugsitz 34 gegenüber der Fahrzeugkabine 28 federnd bzw. dämpfend gelagert ist.

In Fig. 1 bis 3 sind jeweils Bewegungssysteme gezeigt, bei denen eine Sekundärseite gegenüber einer Primärseite bewegbar angeordnet ist. Es ist denkbar, dass das Fahrzeug 10 sowohl ein Kabinenfederungssystem gemäß Fig. 2 als auch ein Sitzfederungssystem gemäß Fig. 3 aufweist. Hierbei werden jedoch die hierfür vorgesehenen Aktuatoren 32, 36 derart angesteuert, dass einerseits der grundsätzlich beabsichtige Zweck der Federung, der in der Komforterhöhung für den Bediener besteht, erreicht wird und andererseits die Aktuatoren 32, 36 aktiv angesteuert werden, um dem Bediener einen nicht optimalen oder einen unsicheren Betriebszustand des Fahrzeugs 10 oder einen nicht optimalen oder einen unsicheren Betriebszustand mindestens einer Arbeitsfunktion wahrnehmbar zu machen. Es handelt sich hierbei um voneinander abhängige Systeme, was bei der Ansteuerung zu berücksichtigen ist.

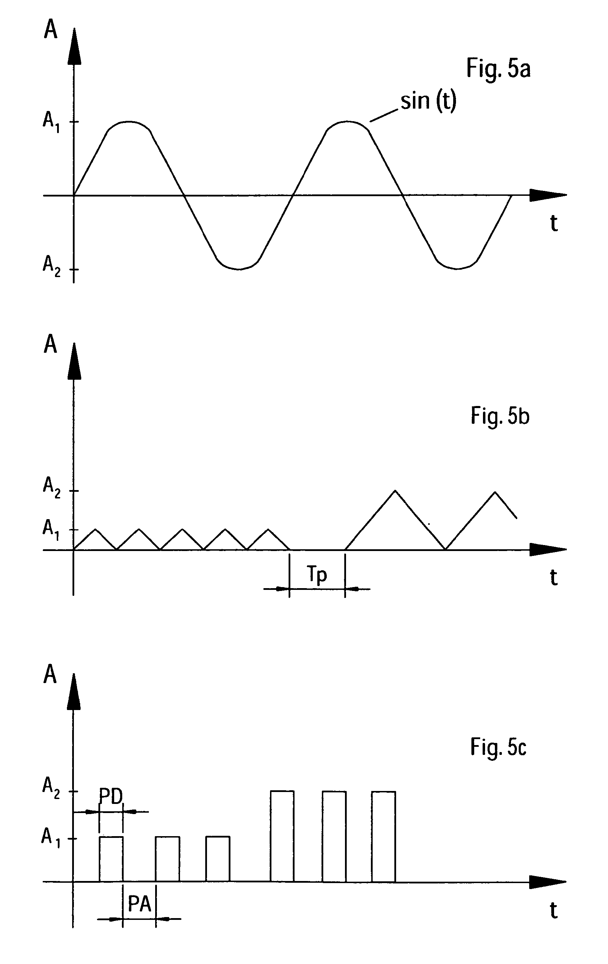

Die Aktuatoren 18, 26, 32, 36 sind derart ansteuerbar, dass diese eine vorgebbare zeitlich veränderliche, insbesondere eine periodische Bewegung ausführen. Beispiele der hiermit erzeugbaren Auslenkungsamplituden der Aktuatoren 18, 26, 32, 36 und der damit verbundenen Ansteuersignale sind in Fig. 5a bis 5c gezeigt.

Fig. 5a zeigt in einem Diagramm die Amplitude A der Auslenkung eines oder mehrerer der Aktuatoren 18, 26, 32, 36 als Funktion der Zeit t. Vergleichbar zur Auslenkung der Aktuatoren 18, 26, 32, 36 kann auch der zeitliche Verlauf eines die Aktuatoren 18, 26, 32, 36 ansteuernden Ansteuersignals sein. Die in Fig. 5a gezeigte Auslenkung ist periodisch und hat den Verlauf einer Sinusfunktion. Die maximale Amplitude A1 und A2 ist im Wesentlichen konstant, sie kann jedoch variiert werden. Daher ist die von dem betreffenden Aktuator 18, 26, 32, 36 hervorgerufene Bewegung der Sekundärseite gegenüber der Primärseite eine Schwingungsbewegung. Die Schwingungsbewegung weist eine vorgebbare Frequenz auf, welche im Wesentlichen konstant ist und einen Wert von 0,2 Hz hat.

In Fig. 5b ist eine weitere mögliche Bewegungsart gezeigt, gemäß der die von einem oder mehreren der Aktuatoren 18, 26, 32, 36 hervorgerufene Bewegung der Sekundärseite gegenüber der Primärseite eine im Wesentlichen dreieckförmige Bewegung aufweist, vergleichbar einer Sägezahn-Form. Hier werden zunächst dreieckförmige Bewegungen mit einer Amplitude A1 ausgeführt. Hieran schließt sich für eine Zeitdauer von Tp keine aktiv hervorgerufene Bewegung des betreffenden Aktuators 18, 26, 32, 36 an. Mit anderen Worten wird der Aktuator 18, 26, 32, 36 während dieser Zeitdauer nicht aktiv angesteuert. Dennoch kann er Bewegungen ausführen, welche beispielsweise aufgrund von Federbewegungen zwischen Primär- und Sekundärseite verursacht werden. Nach Ablauf der Zeitdauer Tp werden dreieckförmige Bewegungen mit einer Amplitude A2 ausgeführt. Diese haben eine niedrigere Frequenz als die dreieckförmigen Bewegungen mit der Amplitude A1.

In Fig. 5c ist eine weitere mögliche Bewegungsart gezeigt, gemäß der die von einem oder mehreren der Aktuatoren 18, 26, 32, 36 hervorgerufene Bewegung der Sekundärseite gegenüber der Primärseite im Wesentlichen eine Pulsform aufweist. Der Pulsabstand PA ist vorgebbar. Er kann variabel sein und liegt in einem Bereich von 0 s bis 10 s. Die Pulsdauer PD ist ebenfalls vorgebbar und ist in dem in Fig. 5c gezeigten Beispiel im Wesentlichen konstant. Die Pulsdauer PD weist einen Wert von 1/5 s auf.

Die Bewegung der Sekundärseite gegenüber der Primärseite weist gemäß Fig. 5a bis 5c eine Amplitude mit einem vorgebbaren Wert auf, welcher in einem Bereich von 1 mm bis 30 mm liegt. Hierbei ist berücksichtigt, dass die von den Aktuatoren 18, 26, 32, 36 hervorgerufene Bewegung der Sekundärseite gegenüber der Primärseite derart begrenzt ist, dass diese zu keiner kritischen Situation für das Fahrzeug 10 und/oder für den Bediener führt.

Die in Fig. 1 bis 3 gezeigten Aktuatoren 18, 26, 32, 36 sind hydraulisch ansteuerbar, wobei elektrisch angesteuerte Hydraulikventile und Drosselelemente (nicht dargstellt) vorgesehen sind, mit welchen die hydraulische Ansteuerung letztendlich durchgeführt wird. Somit werden die Aktuatoren 18, 26, 32, 36 dadurch aktiv angesteuert, dass der Fluss von unter Druck stehender Hydraulikflüssigkeit zu den Aktuatoren 18, 26, 32, 36 hin oder von den Aktuatoren 18, 26, 32, 36 weg mit entsprechend vorgesehenen elektrisch bzw. elektromagnetisch ansteuerbaren Hydraulikventilen steuerbar ist.

Fig. 4 zeigt ein als landwirtschaftliches Nutzfahrzeug ausgebildetes Fahrzeug 10, welches das erfindungsgemäße aktive Bewegungssystem aus Fig. 1 aufweist (in Fig. 4 nicht dargestellt). An dem Fahrzeug 10 ist ein Frontlader 38 adaptiert, welcher einen Ausleger 40 und eine Laderschaufel 42 aufweist. Der Ausleger 40 des Frontladers 38 kann mit dem doppeltwirkenden Hydraulikzylinder 44 angehoben bzw. abgesenkt werden. Der Frontlader 38 stellt eine Arbeitsfunktion des Fahrzeugs 10 dar.

An dem Fahrzeug 10 bzw. dem Frontlader 38 sind mehrere Sensoren 46, 48, 50, 52, 54, 56, 58 angeordnet sind. So kann mit dem Sensor 46 der Ausfahrweg der Kolbenstange des Hydraulikzylinders 44 bestimmt werden. Der Sensor 48 detektiert die Fahrzeuggeschwindigkeit über dem Untergrund. Sensor 50 detektiert die Drehzahl des linken Vorderrads 14. Für die anderen drei Räder sind ebenfalls Sensoren vorgesehen, welche jedoch in Fig. 4 nicht gezeigt sind. Der Sensor 52 detektiert den eingestellten Lenkwinkel des Vorderrads 14 bzw. der Vorderachse 12. Der Sensor 54 detektiert die Beschleunigung des Fahrzeugs 10. Der Sensor 56 detektiert die Kraft, welche ein an das Fahrzeug 10 adaptiertes, in Fig. 4 nicht gezeigtes Arbeitsgerät auf das Fahrzeug 10 ausübt. Mit dem Sensor 58 kann das auf den hinteren Fahrantrieb übertragene Drehmoment detektiert werden. Weiterhin ist ein GPS-Empfänger 60 vorgesehen, mit welchem GPS-Positionssignale empfangen werden können, aus welchen die Steuereinrichtung 30 die aktuelle Position des Fahrzeugs 10 ermitteln kann. Sämtliche Sensoren sind mittels elektrischen Leitungsverbindungen (gestrichelt dargestellt) mit der Steuereinrichtung 30 verbunden. Obwohl in Fig. 4 nicht gezeigt, können noch weitere Sensoren vorgesehen sein, mit welchen weitere Größen detektierbar sind und aus welchen sich eine entsprechende Zustandsgröße des Fahrzeugs 10 oder einer Arbeitsfunktion bzw. aus welchen sich eine Zustandsgröße eines an das Fahrzeug 10 adaptierten Arbeitsgeräts ableiten bzw. bestimmen lässt.

So sind gemäß Fig. 1 bzw. 3 insbesondere Aktuatorsensoren 64 vorgesehen, mit welchen der jeweils aktuelle Zustand des Aktuators 18 und/oder 26 bzw. der Aktuatoren 36 ermittelbar ist. Der aktuelle Zustand des jeweiligen Aktuators 18, 26, 36 wird dann der Steuereinrichtung 30 übermittelt.

In der in Fig. 3 gezeigten Fahrzeugkabine 28 ist eine Anzeigeeinrichtung 62 vorgesehen, mit welcher zusätzlich zu der mit den Aktuatoren 36 hervorgerufenen Bewegung zwischen der Sekundärseite (Fahrzeugsitz 34) und der Primärseite (Fahrzeugkabine 28) ein visuelles und ein akustisches Signal erzeugbar ist.

## Patentansprüche

1. Landwirtschaftliches oder industrielles Nutzfahrzeug, insbesondere Traktor, mit einem aktiven Bewegungssystem industriellen Nutzfahrzeugs, mit mindestens einem aktiv ansteuerbaren Aktuator (18, 26, 32, 36), mindestens einem Sensor (48, 50, 52, 54, 56, 58) und einer Steuereinrichtung (30), wobei eine Sekundärseite (28, 34) gegenüber einer Primärseite (12; 16; 28) des Fahrzeugs (10) federbar bewegbar ist, wobei mit dem Aktuator (18, 26, 32, 36) die Sekundärseite (28, 34) gegenüber der Primärseite (16, 28) des Fahrzeugs (10) dämpfend und/oder federnd abgestützt ist, wobei ein Bediener des Fahrzeugs (10) der Sekundärseite (28, 34) des Fahrzeugs (10) zugeordnet ist, wobei mit dem mindestens einen Sensor (48, 50, 52, 54, 56, 58) eine Größe, die eine Zustandsgröße des Fahrzeugs (10) repräsentiert, detektierbar und der Steuereinrichtung (30) übermittelbar ist, wobei mit der Steuereinrichtung (30) eine Zustandsgröße eines aktuellen Betriebszustands des Fahrzeugs (10) ermittelbar ist, **dadurch gekennzeichnet, dass** mit der Steuereintichtung in Abhängigkeit des aktuellen Betriebszustands des Fahrzeugs (10) der mindestens eine Aktuator (18, 26, 32, 36) derart aktiv ansteuerbar ist, dass mit dem mindestens einen Aktuator (18, 26, 32, 36) die Sekundärseite (28, 34) gegenüber der Primärseite (16, 28) bewegbar ist, um hierdurch dem Bediener einen nicht optimalen oder einen unsicheren Betriebszustand des Fahrzeugs (10) oder einen nicht optimalen oder einen unsicheren Betriebszustand mindestens einer Arbeitsfunktion wahrnehmbar zu machen, wobei die Primärseite einen Fahrzeugrahmen (16) und die Sekundärseite eine Bedienerplattform oder eine Fahrzeugkabine (28) aufweist, oder dass die Primärseite eine Bedienerplattform oder eine Fahrzeugkabine (28) und die Sekundärseite einen Fahrzeugsitz (34) aufweist.

2. Nutzfahrzeug nach Anspruch 1, **dadurch gekennzeichnet, dass** der Aktuator (32, 36) derart ansteuerbar ist, dass dieser eine vorgebbare zeitlich veränderliche Bewegung ausführt.

3. Nutzfahrzeug nach Anspruch 1 oder 2, **dadurch gekennzeichnet, dass** die von dem Aktuator 32, 36) hervorgerufene Bewegung der Sekundärseite ( 28, 34) gegenüber der Primärseite (16, 28) eine Schwingungsbewegung ist.

4. Nutzfahrzeug nach einem der Ansprüche 1 bis 3, **dadurch gekennzeichnet, dass** die von dem Aktuator (18, 26, 32, 36) hervorgerufene Bewegung der Sekundärseite (28, 34) gegenüber der Primärseite (16, 28) eine pulsförmige Bewegung ist.

5. Nutzfahrzeug nach einem der Ansprüche 1 bis 4, **dadurch gekennzeichnet, dass** die von dem Aktuator (32, 36) hervorgerufene Bewegung der Sekundärseite (28, 34) gegenüber der Primärseite (16, 28) eine vorgebbare Frequenz aufweist, welche nicht in einem vorgebbaren Eigenfrequenzbereich des Fahrzeugs (10) oder des Bedieners liegt.

6. **Nutzfahrzeug** nach einem der Ansprüche 1 bis 5, **dadurch gekennzeichnet, dass** die von dem Aktuator (18, 26, 32, 36) hervorgerufene Bewegung der Sekundärseite (28, 34) gegenüber der Primärseite (16, 28) derart begrenzbar ist, dass diese zu keiner kritischen Situation für das Fahrzeug (10) und/oder für den Bediener führt.

7. Nutzfahrzeug nach einem der Ansprüche 1 bis 6, **dadurch gekennzeichnet, dass** mit dem mindestens einen Aktuator (32, 36) die Sekundärseite ( 28, 34) gegenüber der Primärseite (16, 28) dann bewegbar ist, wenn ein von dem optimalen Betriebszustand abweichender Betriebszustand vorliegt.

8. Nutzfahrzeug nach einem der Ansprüche 1 bis 7, **dadurch gekennzeichnet, dass** mit dem mindestens einen Aktuator (32, 36) die Sekundärseite ( 28, 34) gegenüber der Primärseite (16, 28) dann bewegbar ist, wenn ein von dem sicheren Betriebszustand abweichender Betriebszustand vorliegt.

9. Nutzfahrzeug nach einem der Ansprüche 1 bis 8, **dadurch gekennzeichnet, dass** mit dem mindestens einen Aktuator (32, 36) die Sekundärseite ( 28, 34) gegenüber der Primärseite (16, 28) dann bewegbar ist, wenn der aktuelle Betriebszustand oder eine aktuelle Zustandsgröße des Fahrzeugs (10) oder einer Arbeitsfunktion (38) des Fahrzeugs (10) einen vorgegebenen Grenzwert über- oder unterschreitet.

10. Nutzfahrzeug nach einem der Ansprüche 1 bis 9, **dadurch gekennzeichnet, dass** mit dem mindestens einen Aktuator (18, 26, 32, 36) die Sekundärseite ( 28, 34) gegenüber der Primärseite (16, 28) mit einem einzelnen Bewegungspuls bewegbar ist, um dem Bediener wahrnehmbar zu machen, dass ein bestimmter Zustand eines an das Fahrzeug (10) adaptierten Arbeitsgeräts (38) vorliegt.

11. **Nutzfahrzeug** nach einem der Ansprüche 1 bis 10, **dadurch gekennzeichnet, dass** die mit dem mindestens einen Aktuator (18, 26, 32, 36) hervorgerufene Bewegung zwischen der Sekundärseite (16; 28; 34) und der Primärseite (16, 28) abschaltbar ist.

12. Nutzfahrzeug nach einem der Ansprüche 1 bis 11, **dadurch gekennzeichnet, dass** zusätzlich zu der mit dem mindestens einen Aktuator (18, 26, 32, 36) hervorgerufenen Bewegung zwischen der Sekundärseite (28, 34) und der Primärseite (12; 16; 28) ein visuelles und/oder akustisches Signal erzeugbar ist.

## Claims

1. Agricultural or industrial utility vehicle, in particular tractor, having an active movement system, comprising at least one actively controllable actuator (32, 36), at least one sensor (48, 50, 52, 54, 56, 58) and a control device (30), a secondary side (28, 34) being able to be resiliently moved relative to a primary side (16, 28) of the vehicle (10), by means of the actuator (32, 36) the secondary side (28, 34) is supported in a dampened and/or cushioned manner relative to the primary side (16, 28) of the vehicle (10), an operator of the vehicle (10) being associated to the secondary side (28, 34) of the vehicle (10), by means of the at least one sensor (48, 50, 52, 54, 56, 58) a variable representing a state variable of the vehicle (10) being able to be detected and being able to be transmitted to the control device (30), by means of the control device (30) a state variable of a current operating state of the vehicle (10) being able to be detected, **characterized in that** by means of the control device, depending on the current operating state of the vehicle (10), the at least one actuator (32, 36) may be actively controlled such that by means of the at least one actuator (32, 36), the secondary side (28, 34) may be moved relative to the primary side (16, 28), in order therefore to make a non-optimal or an unsafe operating state of the vehicle (10) or a non-optimal or an unsafe operating state of at least one operating function noticeable to the operator, the primary side having a vehicle frame (16) and the secondary side having an operator platform or a vehicle cab (28) or **in that** the primary side comprises an operator platform or a vehicle cab (28) and the secondary side comprises a vehicle seat (34).

2. Utility vehicle according to Claim 1, **characterized in that** the actuator (32, 36) may be controlled such that it carries out a predeterminable movement which may be temporally altered.

3. Utility vehicle according to Claim 1 or 2, **characterized in that** the movement of the secondary side (28, 34) relative to the primary side (16, 28) produced by the actuator (32, 36) is a vibratory movement.

4. Utility vehicle according to one of Claims 1 to 3, **characterized in that** the movement of the secondary side (28, 34) produced by the actuator (32, 36) relative to the primary side (16, 28) is a pulsed movement.

5. Utility vehicle according to one of Claims 1 to 4, **characterized in that** the movement of the secondary side (28, 34) produced by the actuator (32, 36) relative to the primary side (16, 28) has a predeterminable frequency which is not in a predeterminable natural frequency range of the vehicle (10) or of the operator.

6. Utility vehicle according to one of Claims 1 to 5, **characterized in that** the movement of the secondary side (28, 34) produced by the actuator (32, 36) relative to the primary side (16, 28) may be limited such that it does not lead to a critical situation for the vehicle (10) and/or for the operator.

7. Utility vehicle according to one of Claims 1 to 6, **characterized in that** by means of the at least one actuator (32, 36), the secondary side (28, 34) may be moved relative to the primary side (16, 28) when an operating state deviating from the optimal operating state is present.

8. Utility vehicle according to one of Claims 1 to 7, **characterized in that** by means of the at least one actuator (32, 36), the secondary side (28, 34) may be moved relative to the primary side (16, 28) when an operating state deviating from the safe operating state is present.

9. Utility vehicle according to one of Claims 1 to 8, **characterized in that** by means of the at least one actuator (32, 36), the secondary side (28, 34) may be moved relative to the primary side (16, 28) when the current operating state or a current state variable of the vehicle (10) or an operating function (38) of the vehicle (10) exceeds or falls below a predetermined threshold value.

10. Utility vehicle according to one of Claims 1 to 9, **characterized in that** by means of the at least one actuator (32, 36), the secondary side (28, 34) may be moved relative to the primary side (16, 28) with a single movement pulse in order to make it noticeable to the operator that a specific state of an implement (38) adapted to the vehicle (10) is present.

11. Utility vehicle according to one of Claims 1 to 10, **characterized in that** the movement produced by the at least one actuator (32, 36) between the secondary side (28, 34) and the primary side (16, 28) may be interrupted.

12. Utility vehicle according to one of Claims 1 to 11, **characterized in that** a visual and/or acoustic signal may be generated additionally to the movement produced by the at least one actuator (32, 36) between the secondary side (28, 34) and the primary side (16, 28).

## Revendications

1. Véhicule utilitaire agricole ou industriel, notamment tracteur, comprenant un système de déplacement actif comprenant au moins un actionneur (32, 36) pouvant être commandé activement, au moins un capteur (48, 50, 52, 54, 56, 58) et un dispositif de commande (30), un côté secondaire (28, 34) pouvant être déplacé avec suspension par rapport à un côté primaire (16, 28) du véhicule (10), le côté secondaire (28, 34) étant supporté avec l'actionneur (32, 36) par amortissement et/ou suspension par rapport au côté primaire (16, 28) du véhicule (10), un opérateur du véhicule (10) étant affecté au côté secondaire (28, 34) du véhicule (10), une grandeur qui représente une grandeur d'état du véhicule (10) pouvant être détectée par l'au moins un capteur (48, 50, 52, 54, 56, 58) et pouvant être transmise par celui-ci au dispositif de commande (30), une grandeur d'état d'un état de fonctionnement actuel du véhicule (10) pouvant être déterminée avec le dispositif de commande (30), **caractérisé en ce que** l'au moins un actionneur (32, 36) peut être commandé activement avec le dispositif de commande en fonction de l'état de fonctionnement actuel du véhicule (10) de telle sorte que le côté secondaire (28, 34) puisse être déplacé par rapport au côté primaire (16, 28) avec l'au moins un actionneur (32, 36), afin de communiquer à l'opérateur un état de fonctionnement non optimal ou peu sûr du véhicule (10) ou un état de fonctionnement non optimal ou peu sûr d'au moins une fonction de travail, le côté primaire présentant un châssis de véhicule (16) et le côté secondaire présentant une plate-forme d'opérateur ou une cabine de véhicule (28), ou le côté primaire présentant une plate-forme d'opérateur ou une cabine de véhicule (28) et le côté secondaire présente un siège de véhicule (34).

2. Véhicule utilitaire selon la revendication 1, **caractérisé en ce que** l'actionneur (32, 36) peut être commandé de telle sorte qu'il effectue un mouvement prédéfinissable variable dans le temps.

3. Véhicule utilitaire selon la revendication 1 ou 2, **caractérisé en ce que** le mouvement du côté secondaire (28, 34) par rapport au côté primaire (16, 28), provoqué par l'actionneur (32, 36), est un mouvement d'oscillation.

4. Véhicule utilitaire selon l'une quelconque des revendications 1 à 3, **caractérisé en ce que** le mouvement du côté secondaire (28, 34) par rapport au côté primaire (16, 28), provoqué par l'actionneur (32, 36), est un mouvement de type impulsion.

5. Véhicule utilitaire selon l'une quelconque des revendications 1 à 4, **caractérisé en ce que** le mouvement du côté secondaire (28, 34) par rapport au côté primaire (16, 28), provoqué par l'actionneur (32, 36), présente une fréquence prédéfinissable, qui ne se situe pas dans une plage de fréquence propre prédéfinissable du véhicule (10) ou de l'opérateur.

6. Véhicule utilitaire selon l'une quelconque des revendications 1 à 5, **caractérisé en ce que** le mouvement du côté secondaire (28, 34) par rapport au côté primaire (16, 28), provoqué par l'actionneur (32, 36), peut être limité de telle sorte qu'il ne conduise à aucune situation critique pour le véhicule (10) et/ou pour l'opérateur.

7. Véhicule utilitaire selon l'une quelconque des revendications 1 à 6, **caractérisé en ce que** le côté secondaire (28, 34) peut être déplacé par rapport au côté primaire (16, 28) par l'au moins un actionneur (32, 36) lorsque l'on est en présence d'un état de fonctionnement s'écartant de l'état de fonctionnement optimal.

8. Véhicule utilitaire selon l'une quelconque des revendications 1 à 7, **caractérisé en ce que** le côté secondaire (28, 34) peut être déplacé par rapport au côté primaire (16, 28) par l'au moins un actionneur (32, 36) lorsque l'on est en présence d'un état de fonctionnement s'écartant de l'état de fonctionnement sûr.

9. Véhicule utilitaire selon l'une quelconque des revendications 1 à 8, **caractérisé en ce que** le côté secondaire (28, 34) peut être déplacé par rapport au côté primaire (16, 28) par l'au moins un actionneur (32, 36) lorsque l'état de fonctionnement actuel ou une grandeur d'état actuelle du véhicule (10) ou d'une fonction de travail (38) du véhicule (10) est au-dessus ou en dessous d'une valeur limite prédéfinie.

10. Véhicule utilitaire selon l'une quelconque des revendications 1 à 9, **caractérisé en ce que** le côté secondaire (28, 34) peut être déplacé par rapport au côté primaire (16, 28) par l'au moins un actionneur (32, 36) afin de communiquer à l'opérateur que l'on est en présence d'un état déterminé d'un engin de travail (38) adapté au véhicule (10).

11. Véhicule utilitaire selon l'une quelconque des revendications 1 à 10, **caractérisé en ce que** le mouvement entre le côté secondaire (28, 34) et le côté primaire (16, 28), provoqué par l'au moins un actionneur (32, 36), peut être coupé.

12. Véhicule utilitaire selon l'une quelconque des revendications 1 à 11, **caractérisé en ce qu'**un signal visuel et/ou acoustique peut être généré en plus du mouvement entre le côté secondaire (28, 34) et le côté primaire (16, 28) provoqué par l'au moins un actionneur (32, 36).
